# DEMANDE DE BREVET EUROPEEN

(11) **EP 0 522 981 A1**
(43) Date de publication de la demande: **13.01.1993**
(21) Numéro de dépôt: 92420215.3
(22) Date de dépôt: 24.06.1992
(51) Int. Cl.: H01M 10/50, H01M 10/04, H01M 2/22, H01M 2/02

(54) **Batterie d'accumulateurs monobloc**

(30) Priorité: 28.06.1991 FR 9108337
(71) Demandeur: SORAPEC S.A., F-94120 Fontenay-sous-Bois (FR)
(72) Inventeur: Bronoel, Guy, F-78000 Versailles (FR); Rouget, Robert, F-75016 Paris (FR); Tassin, Noelle, F-94120 Fontenay-sous-Bois (FR)
(74) Mandataire: Leszczynski, André

(57) **Abrégé**

La batterie d'accumulateurs monobloc est constituée de plusieurs éléments en série disposés côte à côte. Les éléments (1) comportent chacun un boîtier à parois latérales (3) en polymère revêtues extérieurement d'une couche métallique (5) et sont juxtaposés en laissant entre eux un espace occupé par une structure métallique intermédiaire (6). Cette structure, un ondulé par exemple, assure à la fois la dissipation thermique des calories générées dans chaque élément, l'espacement des éléments et la rigidité des parois latérales (3) de chaque élément.

## Description

L'invention concerne une batterie d'accumulateurs étanche, monobloc et de capacité élevée, notamment mais non exclusivement une batterie d'accumulateurs à électrolyte alcalin, nickel-cadmium ou nickel-hydrures par exemple.

La réalisation d'accumulateurs alcalins, notamment en nickel-cadmium, étanches ou semi-étanches et de forte capacité, implique entre autre la résolution des problèmes liés aux échanges thermiques qui interviennent principalement en fin de charge. En effet, le maintien d'une pression interne relativement basse est obtenu en réalisant la recombinaison de l'oxygène formé en fin de charge aux électrodes positives avec les électrodes négatives. Cette réaction de recombinaison est très exothermique et il convient, pour éviter tout emballement du système, d'une part de limiter le courant de fin de charge, d'autre part d'assurer une bonne dissipation vers l'extérieur des calories formées.

Ainsi, dans la plupart des réalisations existantes, les boîtiers des accumulateurs sont métalliques, les parois métalliques ayant une bonne conductivité thermique et de plus assurant une bonne tenue mécanique de l'élément.

Le recours à des boîtiers métalliques étanches a cependant deux inconvénients :
- un alourdissement des éléments comparativement à des boîtiers traditionnels en polymère,
- un coût élevé de fabrication dû notamment aux soudures étanches à réaliser.

L'invention vise à supprimer ces inconvénients tout en assurant une excellente gestion thermique des éléments. De plus, les éléments sont associés de telle façon qu'ils constituent des blocs cohérents. Elle a trait à une batterie d'accumulateurs monobloc constituée de plusieurs éléments en série disposés côte à côte. Les éléments comportent chacun un boîtier à parois latérales en polymère, lesquelles sont revêtues extérieurement d'une couche métallique. Ils sont juxtaposés en laissant entre eux un espace occupé par une structure métallique intermédiaire ondulée ou plissée assurant à la fois la dissipation thermique des calories générées dans chaque élément, l'espacement des éléments et la rigidité des parois latérales de chaque élément.

Par "faces ou parois latérales", on entend désigner les deux faces d'un boîtier ayant la plus grande surface, celles qui se trouveront juxtaposées dans la batterie assemblée.

La structure métallique intermédiaire ondulée ou plissée est une structure radiante.

Chaque élément, avantageusement de forme prismatique, par exemple parallélépipédique, peut avoir une tension de l'ordre de 1,2 V et est constitué par un boîtier essentiellement en polymère qui contient l'électrolyte et les électrodes en nombre et en surface telle que la capacité (Ah) recherchée soit obtenue. Le polymère constituant les parois du bottier est de nature à être stable dans les conditions d'emploi. Il peut s'agir par exemple de polypropylène ou de polyamides.

Avantageusement les parois latérales, sont plus minces, par exemple 0,5 à 2 mm d'épaisseur, que les autres, 2 à 4 mm d'épaisseur par exemple. Toutefois, dans leur partie supérieure, de préférence sur 30 à 60 mm à partir de leur bord supérieur, elles peuvent avoir une plus grande épaisseur, comprise par exemple entre 2 et 4 mm, soit du même ordre de grandeur que les autres parois qui ferment le boîtier. Pour des éléments destinés à la traction électrique ayant par exemple une capacité de 170 Ah, les boîtiers ont typiquement une hauteur comprise entre 150 et 260 mm et une longueur de l'ordre de 200 mm, leur largeur étant comprise entre 30 et 60 mm.

Les parois dont l'épaisseur est la plus faible sont revêtues extérieurement d'une couche métallique avantageusement très mince (épaisseur < 10 microns). Ce revêtement, qui doit être parfaitement adhérent à la paroi en polymère, peut être obtenu par adhésion d'une première couche constituée d'une peinture métallique contenant outre un métal, dont les particules sont en dispersion, un liant polymère et si possible un solvant du polymère constituant la paroi. Dans le cas du polypropylène où ce solvant n'existe pas, on pourra procéder à une prémétallisation de la paroi par voie chimique ou physique, puis au renforcement de la couche de prémétallisation par une peinture métallique. On peut également, procédé plus coûteux, renforcer l'épaisseur de la prémétallisation ou d'une couche de peinture métallique par électrolyse.

La présente invention sera mieux comprise en référence aux dessins annexés, donnés à titre d'exemples non limitatifs. Dans ces dessins :
- la figure 1 est une vue schématique en perspective d'un boîtier de batterie vide,
- la figure 2 est une vue en coupe transversale d'une batterie d'accumulateurs selon l'invention,
- la figure 3 est une vue schématique de dessus du dispositif de mise en série des boîtiers, selon l'axe III de la figure 1, et
- la figure 4 est une vue de détail reprise de la figure 2, illustrant le raccordement aux têtes de plaques.

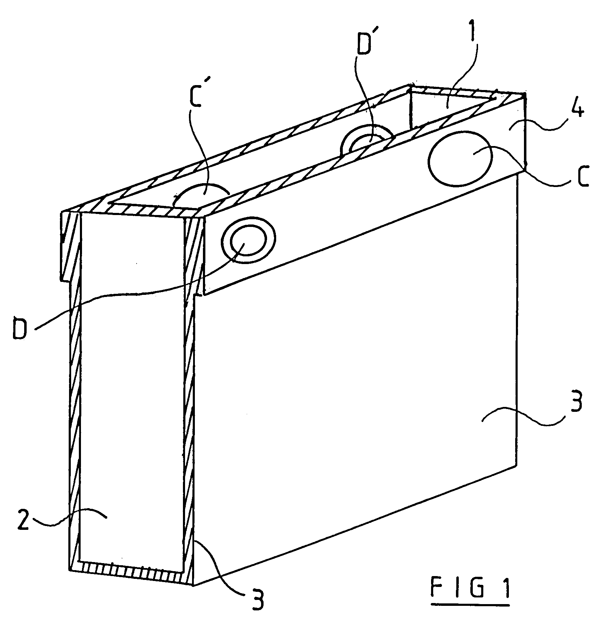

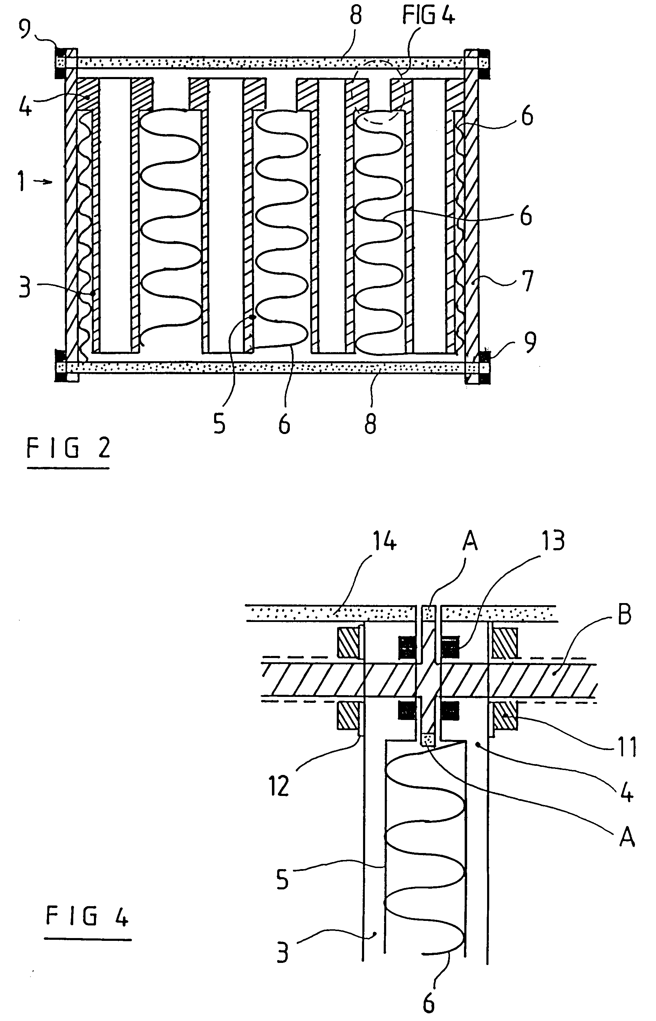

Comme on le voit sur la figure 1, la batterie comprend des éléments 1 présentant chacun des parois 2 les fermant en bout et des parois latérales minces 3. Ces parois latérales minces 3 présentent, dans leur partie haute, une surépaisseur et se transforment en parois plus épaisses 4. A travers ces parois 4 sont ménagés des perçages C, C′, D, D′ dont on verra la raison d'être plus loin. Les perçages D et D′ présentent chacun une gorge de joints et les perçages C ont un diamètre plus grand que les perçages D. Les parois minces sont revêtues extérieurement d'une couche métallique, ainsi que cela est représenté sur la figure 2. Sur cette figure, en effet, où on a illustré une batterie comprenant quatre éléments, l'extérieur des parois latérales minces 3 est revêtu d'une couche métallique 5 ; les éléments sont juxtaposés les uns aux autres en laissant entre eux des espaces dans lesquels on a placé des structures métalliques intermédiaires 6, constituées ici d'un ondulé en métal ou en alliage métallique. On retrouve également cet ondulé 6 à chaque extrémité de la batterie.

L'assemblage mécanique des éléments 1 est effectué en les serrant contre les structures métalliques ondulées 6 qui sont insérées entre deux surfaces métallisées 5, dont l'une appartient à un élément et l'autre à un autre. L'ensemble est maintenu serré par deux plaques 7 situées aux extrémités du bloc constitué par n éléments juxtaposés (4 sur la figure 2), ces plaques 7 assurant le serrage de l'ensemble par des tiges 8 les réunissant et des vis de serrage 9. Bien entendu, les plaques doivent être parfaitement rigides et le serrage ne pas conduire à leur déformation. La mise en raccordement aux têtes de plaques sera illustrée plus en détail sur la figure 4.

On observera par contre que l'emploi d'une structure ondulée et dans une certaine mesure plissée permet un espacement non rigide entre les éléments, par élasticité de forme. Ce facteur est d'importance pour la cohésion interne de la batterie, si par exemple celle-ci doit subir des chocs.

Le dispositif qui vient d'être décrit résout deux problèmes importants :
- la cohésion mécanique de l'ensemble, c'est-à-dire la fonction espacement et maintien, chaque bloc pouvant comporter un nombre variable d'éléments suivant les desiderata de l'utilisateur. A noter qu'on minimisera la masse relative des plaques extrêmes en associant un plus grand nombre d'éléments. On observe que, bien que les parois de grande surface soient d'épaisseur faible, on évite toute déformation des éléments par l'emploi des structures métalliques intermédiaires elles-mêmes maintenues serrées par les plaques indéformables extrêmes. Par ailleurs, le recours à des bottiers essentiellement en polymère rend possible la soudure ou le collage du couvercle par des moyens peu coûteux et bien connus ;
- le refroidissement des éléments par les structures métalliques insérées entre deux éléments. En effet, ces structures ondulées ou plissées peuvent être aisément ventilées. De plus, on observe que la diffusion des calories à travers les parois minces de polymère est rapide et qu'il existera de ce fait un gradient thermique faible entre le coeur de l'élément et la surface externe métallisée des parois. Les parois métallisées de grande surface participent à une partie du transfert thermique vers un fluide (air par exemple) ventilé et les structures ondulées ou plissées en contact par serrage avec ces parois au reste du transfert.

Afin de ne pas abaisser trop l'énergie volumique et massique des éléments, l'espace entre deux éléments pourra être fixé entre 1,5 et 5 mm et typiquement à 2,5 mm. L'élément métallique, l'ondulé par exemple, peut être réalisé en différents matériaux métalliques et, s'agissant d'éléments étanches, en acier ou en alliage d'aluminium anodisé. Suivant la nature du matériau métallique utilisé (donc de ses caractéristiques mécaniques intrinsèques), l'épaisseur de la structure métallique ondulée peut être comprise entre 0,3 et 1 mm et le pas d'ondulation entre 1 et 6 mm. L'épaisseur avant serrage de la structure ondulée est choisie en fonction de sa capacité de déformation et de la distance qui existera, après serrage, entre les éléments dans leur partie supérieure, distance égale à l'épaisseur de la pièce de connexion assurant également l'étanchéité des éléments au niveau de leur connexion électrique.

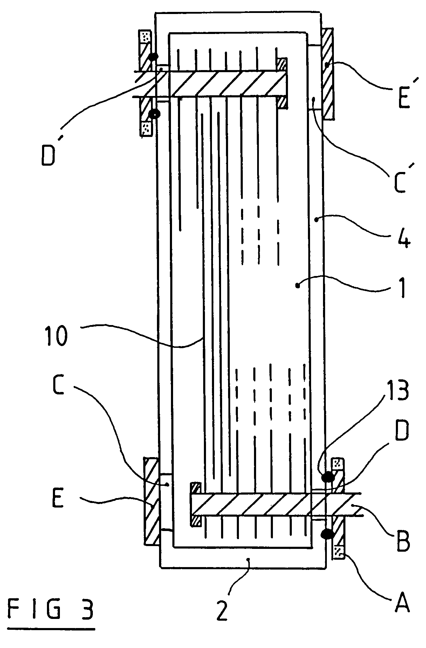

Concernant la mise en série électrique des éléments ainsi assemblés, il est prévu un dispositif particulièrement simple représenté sur la figure 3. Cette figure correspond à la figure 1 selon III, où on a représenté les électrodes 10 (quatre sont effectivement représentées, les autres sont en pointillé).

Dans la partie supérieure de chaque grande paroi, partie 4 dont l'épaisseur du boîtier est plus grande et qui de plus n'est pas métallisée, sont réalisés pour chaque élément 4 orifices circulaires, à savoir les 2 perçages D et D′ de diamètre généralement inférieur à 20 mm et typiquement de diamètre 12 mm, et les 2 perçages C et C′ de diamètre plus grand que les précédents, généralement supérieur à 25 mm et typiquement de diamètre 30 mm. Chaque orifice de grand diamètre est en face d'un orifice de petit diamètre.

Une pièce de raccordement B, avantageusement en nickel, cuivre nickelé ou acier nickelé, assure la jonction électrique entre 2 éléments consécutifs. Elle comporte 2 parties cylindriques opposées sur la section desquelles seront soudées ou boulonnées les têtes de plaques des électrodes positives d'un élément et des électrodes négatives de l'autre. Elle prend place dans les petits orifices D, respectivement D′, déjà mentionnés, sur des joints toriques 13. L'opération de soudure ou de serrage est rendue aisée par l'accès donné par le grand orifice C, respectivement C′, face à l'axe cylindrique de raccordement. Des pièces annulaires A, A′ servent à l'isolation électrique, tandis que les orifices C, C′ non utilisés sont bouchés par des pièces en plastique E, E′.

Comme on la voit sur la figure 4, la pièce de raccordement B comporte également une partie cylindrique externe aux éléments qui serre les joints toriques 13 dont les gorges sont situées autour des orifices D et D′. Ce serrage assurant l'étanchéité est effectué par un jeu d'écrous 11 et de rondelles 12 de blocage, mis en place avant le raccordement aux têtes de plaque. Afin d'éviter tout risque de contact avec cette pièce de connexion, celle-ci est enserrée dans sa partie médiane par la pièce annulaire A, en isolant (polymère par exemple). Un couvercle 14 ferme l'ensemble.

Ce dispositif de connexion est particulièrement simple, donc peu coûteux, aisé à mettre en place, et par sa conception conduit à des pertes ohmiques insignifiantes. Bien entendu, les deux éléments extrêmes de la batterie comportent des bornages particuliers pour les sorties des pôles + et - de la batterie.

## Revendications

1. Batterie d'accumulateurs monobloc constituée de plusieurs éléments en série disposés côte à côte, ces éléments (1) comportent chacun un boîtier à parois latérales (3) en polymère et étant juxtaposés en laissant entre eux un espace occupé par une structure métallique intermédiaire (6), caractérisée en ce que les parois latérales (3) sont revêtues extérieurement d'une couche métallique (5) et en ce que la structure métallique intermédiaire (6) est constituée d'une structure ondulée ou plissée assurant à la fois la dissipation thermique des calories générées dans chaque élément (1), l'espacement des éléments et la rigidité des parois latérales (3) de chaque élément.

2. Batterie selon la revendication 1, caractérisée en ce que la structure métallique intermédiaire (6) est constituée d'un ondulé en métal ou alliage métallique dont le pas d'ondulation est compris entre 1 et 6 mm et l'épaisseur de l'ondulé est comprise entre 0,3 et 1 mm.

3. Batterie selon la revendication 1, caractérisée en ce que le boîtier de chaque élément (1) est parallélépipédique et comporte deux grandes parois latérales minces (3) dont, l'épaisseur est comprise entre 0,5 et 2 mm.

4. Batterie selon la revendication 1, caractérisée en ce que chaque paroi latérale (3) est revêtue d'une couche métallique (5) adhérente d'un métal ou alliage métallique d'épaisseur inférieure à 10 microns.

5. Batterie selon la revendication 1, caractérisée en ce que les structures métalliques intermédiaires (6) sont maintenues serrées en contact avec les faces métallisées de deux éléments consécutifs (1) par des plaques rigides extrêmes (7) réunies par des tiges de serrage (8) situées sur le pourtour de ces plaques et extérieures à la batterie.

6. Batterie selon la revendication 1, caractérisée en ce que les parois latérales (3) présentent une partie (4) de plus grande épaisseur.

7. Batterie selon la revendication 1 ou 6, caractérisée en ce que la connexion électrique entre deux éléments est réalisée par une pièce métallique en nickel (B), acier ou cuivre nickelé assurant également par serrage sur des joints toriques (13) l'étanchéité de chaque élément.

8. Batterie à électrolytes alcalins, selon la revendication 1.

9. Batterie nickel-cadmium ou nickel-hydrures selon la revendication 8.
